# EUROPÄISCHE PATENTSCHRIFT

(11) **EP 3 007 893 B1**
(45) Veröffentlichungstag und Bekanntmachung des Hinweises auf die Patenterteilung: **02.12.2020**
(21) Anmeldenummer: 14721808.5
(22) Anmeldetag: 25.04.2014
(51) Int. Cl.: B32B 5/02, H02K 3/44, B32B 27/08, B32B 27/12, B32B 27/28, B32B 27/32

(54) **SCHICHTSTRUKTUR AUF SILIKONBASIS MIT OLEOPHOB-HYDROPHOBER OBERFLÄCHE, EIN VERFAHREN ZUR DARSTELLUNG EINER SOLCHEN SOWIE EINE ELEKTRISCHE MASCHINE MIT EINER SOLCHEN**
SILICONE-BASED LAYER STRUCTURE HAVING AN OLEOPHOBIC-HYDROPHOBIC SURFACE, METHOD FOR PRODUCING SUCH A LAYER STRUCTURE, AND ELECTRIC MACHINE HAVING SUCH A LAYER STRUCTURE
STRUCTURE EN COUCHES DOTÉE D'UNE BASE SILICONÉE ET D'UNE SURFACE OLÉOPHOBE-HYDROPHOBE, PROCÉDÉ DE REPRÉSENTATION D'UNE TELLE STRUCTURE ET MACHINE ÉLECTRIQUE POURVUE D'UNE TELLE STRUCTURE

(30) Priorität: 15.06.2013 DE 102013010554
(43) Veröffentlichungstag der Anmeldung: 20.04.2016
(73) Patentinhaber: Volkswagen Aktiengesellschaft, 38440 Wolfsburg (DE)
(72) Erfinder: BEHRENDT, Reiner Nico, 39539 Havelberg (DE)
(74) Vertreter: Gulde & Partner
(86) Internationale Anmeldenummer: PCT/EP2014/058476
(87) Internationale Veröffentlichungsnummer: WO 2014/198451

(56) Entgegenhaltungen:
- EP-A1- 0 695 899
- WO-A1-99/41071
- WO-A2-02/077522
- DE-A1- 19 730 245
- GB-A- 945 785
- US-A- 3 671 048
- US-A- 5 004 643
- US-A1- 2005 106 327
- US-A1- 2010 009 111

## Beschreibung

Die Erfindung betrifft eine elektrische Maschine, die zum Abdichten und/oder zum Verbinden von Teilen eine Schichtstruktur auf Basis von Silikon mit oleophob-hydrophober Oberfläche aufweist. Insbesondere ist die Schichtstruktur als Vergussmasse für Wicklungen und/oder Schaltringe für solche oder als Verklebung von Magneten ausgebildet.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (Ständer), der nach einer häufigen Bauart einen Statorkern (Blechpaket) mit entsprechenden Drahtwicklungen und darauf angeordneten ein oder mehrere Schaltringe umfasst, sowie eine bewegliche Komponente, die bei dem häufigsten Bautyp als Rotor (Läufer) ausgebildet ist, welcher drehbar in oder um dem ringförmig ausgebildeten Stator gelagert ist und eine Vielzahl an Permanentmagneten aufweist. Dabei wird aufgrund des bewegten Magnetfeldes des Rotors ein Stromfluss in der Statorwicklung erzeugt (Generator) beziehungsweise aufgrund des durch den Stator erzeugten Magnetfeldes die mechanische Bewegung/Rotation des Rotors bewirkt (Motor). Umgekehrte Bautypen, bei denen der Rotor eine Wicklung und der Stator Magnete umfasst, sind ebenfalls bekannt.

Teile des, die Wicklung und den Schaltring aufweisenden Stators und/oder Rotors sind zum Zwecke ihrer elektrischen Isolation und ihres mechanischen Schutzes und des Schutzes gegenüber chemischen Einflüssen in einer Vergussmasse eingebettet. Die Vergussmasse wird insbesondere zur Einbettung des Schaltrings (auch als Verschaltungsring oder Kontaktbrücke bezeichnet) verwendet, welcher die Einzelwicklungen elektrisch miteinander verschaltet.

Typischerweise basieren Vergussmassen auf einem Silikonkautschuk. Zur Erhöhung ihrer Wärmeleitfähigkeit enthalten diese Silikonelastomere häufig einen Zusatz hoher Füllstoffanteile, beispielsweise in Form von Quarzpartikeln. Derartige Materialien erfüllen die meisten der technischen Anforderungen an Vergussmassen, insbesondere weisen sie eine sehr geringe elektrische Leitfähigkeit auf, eine hohe Temperatur und Temperaturwechselbeständigkeit, eine hohe Wärmeleitfähigkeit, eine hohe Oxidationsstabilität, eine gute Untergrundhaftung sowie eine einfache Aushärtung und eine hohe Verarbeitungstoleranz. Problematisch ist jedoch die hohe Affinität der Silikone gegenüber Kohlenwasserstoffen. So zeigen sie die Neigung, Motoren- und Getriebeöle zu inkludieren und dadurch aufzuquellen. Durch die Quellung werden jedoch die mechanischen Eigenschaften beeinträchtigt. Beispielsweise nimmt die Festigkeit und Materialhärte ab, die Temperaturbeständigkeit sinkt und eine Ablösung und ggf. Versprödung der Vergussmasse kann die Folge sein. Insbesondere bei Elektromotoren, die bauartbedingt mit Getriebeölen in Kontakt kommen, ist somit die Reduzierung oder Verhinderung der Ölaufnahme und -quellung des Silikonmaterials wünschenswert.

Ähnliche Problematiken sind aus der Dichttechnik bekannt. EP 1 361 261 A2 beschreibt zur Erhöhung der Hydrolyse- und Ölbeständigkeit von Dichtungen das Aufbringen einer Silikondichtung mit einer Mischung aus einem Fluorkunststoff und einem Kunststoff. Dabei erfolgt das Aufbringen über einen Sinter- oder Schmelzprozess des Gemisches.

GB 945 785 A beschreibt ein Isoliermaterial für elektrische Komponenten, insbesondere Kabel in Form eines Textils aus Polyamid. das mit Silikon imprägniert und beschichtet ist. Die Herstellung erfolgt durch Tauchen des Textils in eine Dispersion des Silikons und anschließendem Aushärten des Silikon.

WO 2002/077522 A2 beschreibt ein Gehäuse zur Beherbergung von elektrischen Komponenten, beispielsweise Fahrzeugscheinwerfern. Zum Schutz der elektrischen Komponente vor Feuchtigkeit enthält das Gehäuse ein Behältnis mit einem Trockenmittel, das durch eine wasserdampf-permeable Membran verschlossen ist. Letztere ist durch eine silikonbeschichtete ePTFE-Membran gebildet.

Es ist die wasserabweisende Wirkung von fluorhaltigen Verbindungen aus vielen technischen Bereichen bekannt. Beispielsweise werden Textilien mit PTFE beschichtet oder Fluorcarbonketten werden kovalent an die Fasern angebunden, um hydrophobe und gleichzeitig oleophobe Oberflächen zu erzeugen. Ebenfalls aus der Textilindustrie ist bekannt, hydrophobe Beschichtungen auf Basis von Silikonen und Fluorcarbonen auf die Textilien aufzubringen. So sind etwa PTFE-Textilien oder-Membrane bekannt, die mit Silikonen imprägniert oder beschichtet sind (DE 197 30 245 A1, US 5 004 643 A, WO 1999/41071 A1, EP 0 695 899 A1).

DE 195 24 262 B4 beschreibt das Aufbringen eines härtbaren Fluorsilikon-Überzugs auf ein Silikonkautschuksubstrat, um die Öldurchlässigkeit des Kautschuks zu verringern. Im Anschluss ist es notwendig, das Material unter Verwendung eines Peroxid-Katalysators auszuhärten.

Mit dem Ziel, die Gleitfähigkeit einer Silikonoberfläche zu erhöhen, wurde in DE 203 15 575 U1 eine Schicht aus feindispersiv verteiltem PTFE während des Produktionsprozesses eines Liners auf dessen Außenseite abgelagert.

Der Erfindung liegt die Aufgabe zugrunde, eine elektrische Maschine bereitzustellen, deren silikonbasierte Vergussmasse von Wicklungen und/oder deren Verschaltungen und/oder Magnetverklebungen sowohl Feuchtigkeit als auch ölhaltige Substanzen abweisen, das heißt sowohl hydrophob als auch oleophob sind, und dadurch Beeinträchtigungen ihrer Eigenschaften aufgrund Eindringens von Feuchtigkeit und/oder Ölen vermeiden..

Diese Aufgabe wird durch eine elektrische Maschine mit einer solchen mit den Merkmalen des Anspruchs 1 gelöst.

Somit betrifft die Erfindung eine elektrische Maschine, umfassend einen Stator und einen Rotor, wobei der Stator und/oder der Rotor eine Wicklung und/oder Permanentmagnete umfasst, und wobei im Bereich der Wicklung und/oder im Bereich einer Verklebung der Permanentmagnete eine oleophob-hydrophobe Schichtstruktur angeordnet ist. Die Schichtstruktur umfasst
- eine erste, ein Silikon umfassende Schicht, und
- eine außenliegende zweite, mit der ersten Schicht stoffschlüssig verbundene Schicht mit oleophob-hydrophober Oberfläche, umfassend eine Textilstruktur aus einem thermoplastischen Kunststoff,
wobei die stoffschlüssige Verbindung durch Eindringen des Silikons der ersten Schicht in die Textilstruktur der zweiten Schicht ausgebildet ist.

Eine in der beschriebenen Art ausgebildete Schichtstruktur ermöglicht die Nutzung der wünschenswerten Eigenschaften von Silikon und silikonhaltigen Verbindungen, insbesondere beim Beschichten und Abdichten, auch dann, wenn die Beschichtung äußeren Einwirkungen ausgesetzt ist, welche Silikon chemisch verändern und somit die gewünschten Eigenschaften zerstören. Die Beschichtung mit oleophoben thermoplastischen Kunststoffen führt dazu, dass die silikonhaltige Schicht keinen chemischen Einflüssen mehr ausgesetzt wird und erhöht somit deren Langlebigkeit. Die Verwendung einer zweiten Schicht mit Textilstruktur führt zu einer hohen mechanischen Stabilität der äußeren Schicht. Diese kann somit sehr dünn gehalten werden, was neben hoher Flexibilität der zweiten Schicht dazu führt, dass im Schichtsystem die Eigenschaften der silikonhaltigen Schicht dominieren.

Thermoplastische Kunststoffe im Sinne der Erfindung sind Kunststoffe, die sich in einem bestimmten Temperaturbereich (*thermo-plastisch*) verformen lassen. Dieser Vorgang ist reversibel, das heißt, er kann durch Abkühlung und Wiedererwärmung bis zum schmelzflüssigen Zustand beliebig oft wiederholt werden, solange nicht durch Überhitzung die so genannte thermische Zersetzung des Materials einsetzt. Darin unterscheiden sich Thermoplaste von den Duroplasten und Elastomeren. Ein weiteres Alleinstellungsmerkmal ist die Schweißbarkeit von Thermoplasten. Im Sinne der Erfindung werden unter thermoplastischen Kunststoffen auch diejenigen Kunststoffe gefasst, die nach dem Schmelzen nicht mehr in den ursprünglichen Zustand rückführbar sind. Vielmehr werden Kunststoffe als zu den Thermoplasten gehörend verstanden, die unter Wärmeeinwirkung in verschiedene Formen überführbar sind.

Unter Textilstruktur ist ein Verbund aus Fasern des thermoplastischen Kunststoffs zu verstehen. Diese Fasern sind so zusammengebacht, dass sie Poren aufweisen können. Im Sinne der Erfindung sollen unter Textilstruktur (auch textile Struktur, textile Schicht oder textiles Gewebe) Nonwovens, wie Meltblown- oder Spinnvliese und Nadelfilze, gewebte Strukturen sowie poröse Ausgestaltungen wie offenzellige und geschlossenzellige Schäume verstanden werden. Ebenfalls von "Textilstruktur" umfasst sind membranartige Ausgestaltungen wie mikroporöse Filme die typischerweise durch einen Reckprozess oder eine Expansion bzw. einer Kombination aus beiden Prozessen hergestellt werden. Auch die beispielsweise bei ePTFE-Membranen bekannte Fibrillenstruktur soll hierunter verstanden werden. Ein übliches Verfahren zur Behandlung und Herstellung von textilen Strukturen, insbesondere zur Aufrauhung von textilen Oberflächen ist das so genannte Vernadeln oder auch *"needle punching".* Hierbei werden ähnlich einem Teppich feine nadelartige Faserauswürfe an einer Außenseite des Materials erzielt.

In bevorzugter Ausgestaltung der Erfindung ist vorgesehen, dass eine Schicht mit Textilstruktur, welche einen thermoplastischen Kunststoff umfasst, auf einer Seite, beispielsweise durch Vernadelung, aufgeraut ist und/oder über Poren verfügt. Erfindungsgemäß ist es von Vorteil, wenn die Fasern der aufgerauten Seite beim Herstellungsprozess eines erfindungsgemäßen Schichtsystems mit der silikonhaltigen Schicht in Verbindung gebracht werden, wenn diese noch nicht ausgehärtet ist, sodass es durch Vernetzung zu einer festen Verbindung kommt, indem das noch flüssige Silikon zwischen die Fasern und/oder die Poren der Textilstruktur eindringt. Mit anderen Worten, es ist bevorzugt, dass die stoffschlüssige Verbindung durch ein Verbinden, insbesondere ein Vernetzen der Fasern der Textilstruktur mit der ersten Schicht ausgebildet ist. Die Verbindung erfolgt dabei ähnlich einer Zwickelbildung oder dem Mechanismus eines Klettverschlusses. Die Stärke der Verbindung wird dabei unter anderem durch die Eindringtiefe des Silikons in die Textilstruktur bestimmt. Es ist von Vorteil, wenn die gegenüberliegende Seite der zweiten Schicht bei der Herstellung gereckt wurde, da aufgrund der hohen Dichte die oleophoben Eigenschaften des Gewebes in diesem Bereich verstärkt sind. Der Vorteil dieser Ausgestaltung liegt in einer Kombination aus besonders fester Verbindung mit erhöhten oleophoben Eigenschaften.

In bevorzugter Ausgestaltung der Erfindung ist vorgesehen, dass die stoffschlüssige Verbindung als Verklebung der beiden Schichten, optional mittels eines Haftvermittlers, ausgebildet ist. Das bedeutet, dass das Gewebe vor dem Zusammenbringen der beiden Schichten nicht zwangsläufig aufgeraut wurde. Vielmehr sind hier Materialien bevorzugt, die über die gesamte Dicke gereckt und expandiert wurden. Hierbei entstehen dichte porige Materialien wie Membranen. Der Vorteil vorgereckter Materialien liegt in seinen stark erhöhten oleophoben Eigenschaften und seiner Haltbarkeit.

Beim Aufbringen der Materialien auf die erste Schicht ist vorteilhaft, wenn die Materialien als Platten oder Bänder auf der Unterseite bereits mit einem Haftvermittler ausgestattet sind und direkt mit der silikonhaltigen ersten Schicht verklebt werden können. Bevorzugt ist aber auch die Schicht direkt auf eine, beispielsweise nicht vollständig ausgehärtete, silikonhaltige Schicht aufzubringen und durch ein Eindringen von Silikon in die Poren der Textilstruktur der zweiten Schicht eine feste physikalische Verbindung zu erzielen. In beiden Varianten wird das Gewebe dabei bevorzugt auf die erste Schicht aufgedrückt.

In weiterer bevorzugter Ausgestaltung der Erfindung ist vorgesehen, dass der in der zweiten Schicht verwendete thermoplastische Kunststoff ein halogeniertes Polymer, insbesondere Polytetrafluorethylen (PTFE) ist oder umfasst. Das als Teflon® bezeichnete Polymer eignet sich aufgrund seines linearen unverzweigten Aufbaus besonders gut zum Ausbilden von faserartigen textilen Strukturen. Ebenso geeignet sind verwandte Fluorpolymere wie PCTFE o.ä. Insbesondere das nach dem Reck- und Expansionsprozess als ePTFE bezeichnete Polymer zeichnet sich durch seine hohe Hydrolyse- und Ölbeständigkeit aus. Die endständigen Fluoratome bedingen neben chemischer Inertheit sehr niedrige Adhäsion der Oberfläche. Materialien, die im Sinne der Erfindung mit PTFE überzogen wurden zeichnen sich demnach durch mechanische und chemische Stabilität und über hohe Gleitfähigkeit aus. Letzteres wäre bei der Verwendung des Schichtsystem bei der Produktion von Dichtungen, insbesondere Ringdichtungen, auf Silikonbasis von Vorteil. Daneben sind auch andere chemisch weitgehend inerte bzw. ölbeständige Materialien wie Polyimid in Form textiler Strukturen bevorzugt. Polyimide (Kurzzeichen PI) sind Hochleistungskunststoffe, deren wichtigstes Strukturmerkmal die Imidgruppe ist. Dazu gehören u. a. Polybismaleinimid (PBMI), Polybenzimidazol (PBI) und Polyoxadiazobenzimidazol (PBO), Polyimidsulfon (PISO) und Polymethacrylimid (PMI).

In weiterer bevorzugter Ausgestaltung der Erfindung ist vorgesehen, dass die zweite Schicht eine Membran oder ein Vlies, insbesondere mit einer faserigen Unterseite ist. Das heißt, dass vorzugsweise auch Materialien Verwendung finden, die keine gereckten Bausteine oder Schichten aufweisen. Damit einher gehen besonders leichte Verarbeitbarkeit. Darüber hinaus sind solche, ungereckten Materialien gegenüber den oben beschriebenen gereckten kostengünstig.

Da insbesondere bei der Verwendung von ungerecktem Material die oleophoben Eigenschaften herabgesetzt sind, ist es sinnvoll, die zweite Schicht an der von der silikonhaltigen ersten Schicht abgewandten Seite, insbesondere durch Aufsprühen einer oleophoben Schicht, zu oleophobieren. Hierzu kann ein Oleophobierungsmittel auf die jeweilige Seite aufgebracht werden. Da es sich bei geeigneten Oleophobierungsmitteln vorzugsweise um Flüssigkeiten, insbesondere um Dispersionen handelt, ist es besonders bevorzugt, das Oleophobierungsmittel auf die fertiggestellte Schicht aufzusprühen. Dies kann sowohl vor, als auch nach dem Herstellen des Schichtsystems erfolgen. Wird erfindungsgemäß eine Schicht mit Textilstruktur auf noch viskoses Silikon aufgebracht, insbesondere aufgedrückt, kann es von Vorteil sein, die Oleophobierung vor dem Zusammenbringen der Schichten aufzutragen. Da der oleophobe Charakter der Schicht dann verhindert, dass das unpolare Silikon durch die gesamte Schicht hindurchdringt.

Das erfindungsgemäße Schichtsystem lässt sich herstellen, indem die Schicht mit der Textilstruktur vor einem Aushärten der Silikonschicht flächig auf diese aufgelegt wird, sodass das viskose Silikon vor dem Aushärten zwischen die Fasern beziehungsweise Poren der Textilstruktur dringt. Im Anschluss wird das Silikon ausgehärtet und es entsteht eine feste mechanische Verbindung zwischen den beiden Schichten. Es ist also nicht nötig, einen Vorläufer feindispersiv auf der Oberfläche zu verteilen und das Material anschließend durch Schmelz- oder Sinterprozesse zu fixieren. Vielmehr kann in einem wenig aufwändigen Schritt die Silikonschicht mit der oleophoben Schicht verbunden werden. Durch die Möglichkeit des Vernetzens der beiden Schichten mittels aufgerauter Gewebeoberflächen entfällt auch eine aufwändige Vorbehandlung der Silikonoberfläche, um die Haftung der oleophoben und damit prinzipiell nicht optimal haftenden Schicht auf der ersten Schicht zu verbessern. Üblich wären hier beispielsweise Plasmabehandlungen der Schicht. Insbesondere bei der Verwendung des Schichtsystems in großen elektrischen Maschinen ist es produktionstechnisch ungünstig, eine solche Vorbehandlung durchzuführen, da dies prozessbedingt zu Schäden an der Maschine führen könnte. Vielmehr ist es möglich, das erfindungsgemäße Schichtsystem als Dichtungen für Ölwannen zu nutzen, um diese abzudichten und/oder gegen Korrosion zu schützen.

Um die Oleophobierung zu erhöhen, insbesondere bei der Verwendung von thermoplastischen Kunststoffen wie Polyimid, zeichnet sich das Verfahren zur Herstellung eines erfindungsgemäßen Schichtsystems dadurch aus, dass vor und/oder nach dem Zusammenführen der beiden Schichten ein Oleophobierungsmittel mindestens einfach auf die Textilstruktur aufgebracht wird. Das heißt, eine Oleophobierung der textilen Schicht kann zum Einen vor dem Auflegen des Gewebes auf die Silikonschicht geschehen. Beispielsweise könnte die Oleophobierung auch beim Herstellungsprozess des Gewebes völlig losgelöst von der Bildung des Schichtsystems geschehen. Dies kann insbesondere dann vorteilhaft sein, wenn es sich bei dem Gewebe um ein großporiges Vlies handelt, welches ein Durchdringen des Silikons durch das Vlies ermöglichen würde. Um dies zu vermeiden, kann die vorher aufgebrachte Oleophobierungsschicht als Sperrschicht für das Silikon wirken.

Ebenfalls bevorzugt ist die Behandlung nach dem Verbinden der Schichten, insbesondere bei der Verwendung von faserartigem, porösen und/oder membranartig ausgestaltetem Material, um den Langzeitschutz zu erhöhen. Alternativ kann eine Oleophobierung sowohl vor, als auch nach dem Verbinden geschehen.

Da elektrische Maschinen bauartbedingt mit Ölen in Kontakt kommen, wird die Langzeitstabilität der entsprechenden Silikonschichtstruktur durch die erfindungsgemäße oleophob-hydrophobe Ausstattung verlängert.

Bevorzugte Ausführungen im Sinne der Erfindung sehen vor, dass die obere, auf dem Silikon befindliche Kunststoffschicht aus einem PTFE-Nadelfilz mit darauf auflaminierter ePTFE-Membran besteht. Die Dicke der ePTFE- Schicht ist dabei gegenüber der PTFE-Nadelfilz-Schicht deutlich dünner. Erfindungsgemäß ist es von Vorteil, wenn die Fasern der PTFE-Nadelfilz-Seite beim Herstellungsprozess eines erfindungsgemäßen Schichtsystems mit der Silikonschicht in Verbindung gebracht werden, wenn diese noch nicht ausgehärtet ist, sodass es durch Vernetzung zu einer festen Verbindung kommt, indem das noch flüssige Silikon zwischen die Fasern des Filzes eindringt oder umgekehrt. Mit anderen Worten, es ist bevorzugt, dass die stoffschlüssige Verbindung durch ein Eindringen der Fasern des Filzes in die erste Schicht ausgebildet ist. Die Stärke der Verbindung wird dabei unter anderem durch die Eindringtiefe der Fasern in die Silikonschicht bestimmt.

Es ist von Vorteil, wenn die ölzugewandte Seite des Schichtsystems aus einer ePTFE-Membran besteht, da diese aufgrund der Mikroporosität besonders schwer von ölartigen oder wässrigen Flüssigkeiten durchdrungen wird. Der Vorteil dieses Schichtensystems besteht in der Beibehaltung der grundlegenden Eigenschaften des Silikons, der festen Haftung zwischen Silikonschicht und PTFE-Nadelfilz-Schicht und der besonders hydrophoben/oleophoben Wirkung der auf der Kontaminationsseite angeordneten und mit dem PTFE-Nadelfilz fest verbundenen ePTFE-Membran.

In einem Ausführungsbeispiel wird das PTFE-Filz, welches einseitig über die auflaminierte ePTFE-Membran verfügt, mit der rauen, d. h. mit der membranfreien Seite, so auf das noch auszuhärtende Silikon aufgelegt, dass die Fasern/Filamente des Gewebes von dem noch flüssigen Silikons gut durchdrungen werden können. Nach der Aushärtung ist somit der Filz sehr gut mit dem Silikon verhaftet, vor allem entsteht hier keine Delta-Alpha-Problematik, da die unterschiedlichen Wärmeausdehnungen beider Materialien (PTFE/Silikon) durch Aufweitung/Verringerung der Faser/Filamentdichte des Filzes bzw. der Membran gut kompensiert werden kann. Es ist somit kein Abschäleffekt zu befürchten. Dies ist ein großer Vorteil gegenüber anderen Kompositmaterialien, wo die Haftung zwischen einer ersten und einer zweiten Schicht durch eine reine Klebeschicht bewirkt wird. Bei diesem klassischen Konzept ist immer mit einer Schichtablösung durch unterschiedliche Wärmeausdehnungen zu rechnen.

In einem weiteren Beispiel hat es sich weiterhin als vorteilhaft erwiesen, die ölzugewandte bzw. silikonabgewandte Seite des Gewebes zusätzlich mit einem Oleophobierungsmittel zu behandeln, insbesondere durch Aufsprühen einer oleophoben Schicht. Hierzu kann ein Oleophobierungsmittel auf die jeweilige Seite aufgebracht werden. Da es sich bei geeigneten Oleophobierungsmitteln vorzugsweise um Flüssigkeiten, insbesondere um Dispersionen handelt, ist es besonders bevorzugt, das Oleophobierungsmittel auf die Seite des faserartigen, porösen und/oder membranartigen Materials aufzusprühen, welche später der Kontamination zugewandt ist. Dies kann sowohl vor, als auch nach dem Herstellen des Schichtsystems erfolgen. Wird das faserartige, poröse und/oder membranartigen Material mit der rauen, faserigen bzw. offenporigen Seite auf das noch flüssiges Silikon aufgebracht, insbesondere aufgedrückt, kann es von Vorteil sein, die Oleophobierung vor dem Zusammenbringen der Schichten aufzutragen. Da der oleophobe Charakter der Schicht dann verhindert, dass das unpolare Silikon durch das gesamte Vlies hindurchdringt und so mit dem späteren Kontaminanten in Kontakt kommt.

Weitere Materialien, die für die Ausbildung der Schutzschicht im Sinne der Erfindung geeignet sind, sind in der folgenden Auflistung genannt:

### Faserartige Materialien:

Polyimide, insbesondere Polyimid-Filze
Polyethylenterephthalat (PET), Polybutylenterephthalat (PBT), insbesondere als Spinn- oder Meltblownvliese (z. B. Colon®, von der Firma Colbond®)
Polyethylennaphtalate (z. B. Teonex®)
Polysulfone, Polyphenylensulfon, Polyphenylensulfid, Polyetherimid, Polyamidimid,
Polyetheretherketon, Polybenzimidazol, Polyaramid, Polyamide, insbesondere die unter der Bezeichnung Hicotec® von der Firma Frenzelit® erhältlichen Vliese auf Basis von
Polyphenylensulfid, Polyetheretherketon und Polyaramid.
Fluorhaltige Polymere, wie z. B. Polytetrafluorethylen, Polyvinylidenfluorid, Tetrafluorethylen-Perfluorpropylen-Copolymer, Tetrafluorethylen-Perfluoralkoxy-Copolymer,
Ethylen-Tetrafluorethylen-Copolymer
Besonders feine Fasern, so genannte Nanofasern, können durch das Meltblown-Verfahren oder Elektrospinning (Ref.:Z.-M. Huang, Composities Science and Technology, Vol. 63, 2003, Seite 2223-53) hergestellt werden.

### Poröse Materialien/Schäume:

Melamin-Harz-Schaumstoffe, z. B. Basotect®
Polyimid-Schäume (z. B. gemäß B. Krause, Adv. Mat., 2002, Vol. 14, Nr. 15, S. 1041-46)
Polyisocyanurate (PIR)-Schaum
Polymethacrylimid (PMI)-Schaum
Polyamide-(z. B. Zotek® NB 50-Blockschaumstoffe)
Polysulfon, Polysulfone, Polyphenylensulfon,
Polyphenylensulfid, Polyetherimid (EP 1454946 B1), Polyamidimid, Polyetheretherketon
Polyethylenterephthalat (PET), Polybutylenterephthalat (PBT)
Polyethylennaphtalate (z. B. Teonex®)

### Membranen:

Als Membranmaterialien können Fluorpolymere, wie Polytetrafluorethylen, Polyvinylidenfluorid, Tetrafluorethylen-Perfluorpropylen-Copolymer, Tetrafluorethylen-Perfluoralkoxy-Copolymer, Ethylen-Tetrafluorethylen-Copolymer, eingesetzt werden, außerdem Polysulfone, Polyethersulfone, Polyetherimide, Polyamide, Polyacrylnitril-Copolymere.

Weitere bevorzugte Ausgestaltungen der Erfindung ergeben sich aus den übrigen, in den Unteransprüchen genannten Merkmalen.

Die Erfindung wird nachfolgend in weiteren Ausführungsbeispielen anhand der zugehörigen Zeichnungen erläutert. Es zeigen:
- Figur 1 A, B: einen Stator (A) und einen Rotor (B) eines Elektromotors in einer perspektivischen Ansicht;
- Figur 2 A, B: eine schematisierte Schnittansicht einer erfindungsgemäßen Schichtstruktur einer Vergussmasse auf Silikonbasis mit oleophob-hydrophober Oberfläche gemäß einer ersten Ausgestaltung der Erfindung, a) vor Aushärten, b) nach Aushärten der Silikonschicht;
- Figur 3 A, B: eine schematisierte Schnittansicht einer erfindungsgemäßen Schichtstruktur einer Vergussmasse auf Silikonbasis mit oleophob-hydrophober Oberfläche gemäß einer zweiten Ausgestaltung der Erfindung, a) vor Aushärten, b) nach Aushärten der Silikonschicht;
- Figur 4 A, B: eine schematisierte Schnittansicht einer erfindungsgemäßen Schichtstruktur einer Vergussmasse auf Silikonbasis mit oleophob-hydrophober Oberfläche gemäß einer dritten Ausgestaltung der Erfindung, a) vor Aushärten, b) nach Aushärten der Silikonschicht;
- Figur 5 A, B, C: eine schematisierte Schnittansicht der Ausführungsbeispiele eins bis drei in einer Ausgestaltung als Runddichtung.

Nachfolgend soll die vorliegende Erfindung am Beispiel einer Vergussmasse für einen Stator sowie für eine Magnetverklebung für einen Rotor eines Elektromotors näher erläutert werden. Es versteht sich jedoch, dass die erfindungsgemäße Schichtanordnung auf Silikonbasis mit oleophob-hydrophober Oberfläche auch in Zusammenhang mit anderen Maschinen oder Komponenten (z. B. als Dichtmaterial für Ölwannen) Einsatz finden kann.

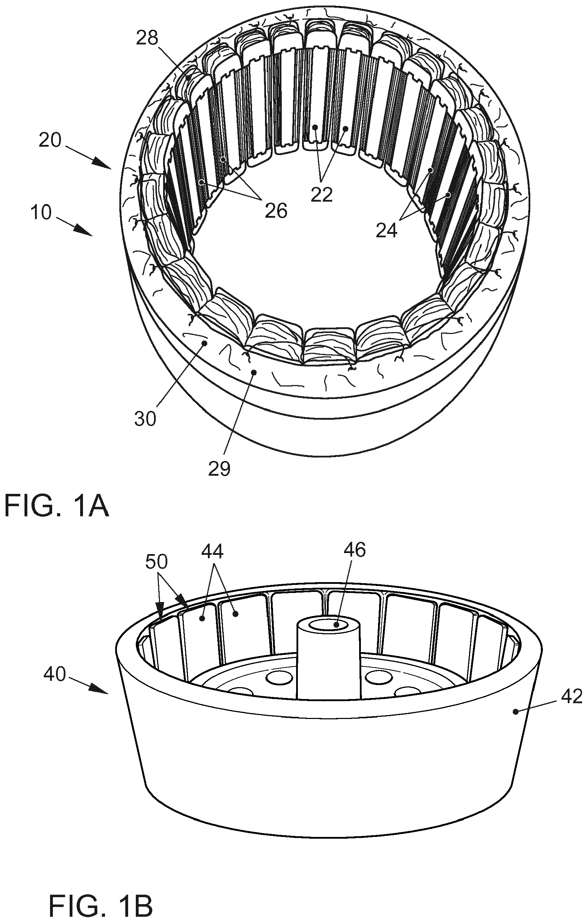

Die prinzipiellen Komponenten eines insgesamt mit 10 bezeichneten Elektromotors werden anhand der Figuren 1A und 1B erläutert, wobei Figur 1A einen Stator 20 und Figur 1B einen Rotor 40 zeigt.

Der in Figur 1A gezeigte Stator 20 weist einen Statorkern 22 auf, welcher in der Regel aus einem laminierten Blechpaket einer Vielzahl von hier vertikal gestapelten Einzelblechen, beispielsweise aus Stahl, besteht. Der Statorkern (das Statorblechpaket) 22 weist in regelmäßigen Abständen an seinem inneren Umfang vertikal verlaufende Nuten 24 auf. In und um die Nuten 24 verlaufen Wicklungen 26, die typischerweise aus durchgehend isolierbeschichtetem Kupferdraht hergestellt sind. Ein über den Statorkern 22 herausragender Teil der Wicklungen 26 wird als Wickelkopf 28 bezeichnet.

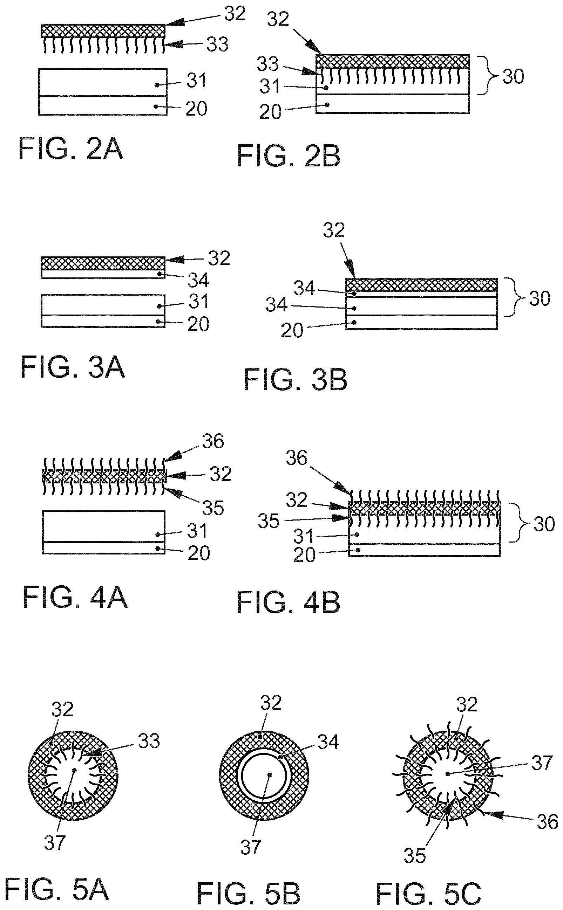

Die Teilwicklungen 26 sind durch einen, in Figur 1A nicht sichtbaren Schaltring 29 miteinander elektrisch verschaltet. Beispielsweise ist bei einem dreiphasigen Elektromotor jede dritte Teilwicklung der hier insgesamt 24 Teilwicklungen über ein gemeinsames Schaltringsegment miteinander verschaltet, so dass in diesem Beispiel ein Schaltring 29 drei Segmente aufweist, die jeweils acht Teilwicklungen elektrisch miteinander verschalten. Zur elektrischen Isolierung des hier nicht sichtbaren Schaltrings 29 ist der obere äußere Bereich des Wickelkopfs 28 sowie des Schaltrings in eine Vergussmasse 30 auf Silikonbasis eingebettet, die in Form der erfindungsgemäßen Schichtstruktur mit oleophob-hydrophober Oberflächenausrüstung ausgebildet ist. Diese wird weiter unten anhand der Figuren 2 und 3 näher erläutert.

Der in Figur 1B dargestellte Rotor 40 weist einen Rotorkern (Blechpaket) 42 sowie eine Vielzahl von Permanentmagneten 44 auf, die mit dem Rotorkern 42 verklebt sind. In der dargestellten beispielhaften Ausführung ist der Rotor 40 als Außenläufer ausgebildet, so dass die Magnete 44 an seiner inneren Umfangsfläche angeordnet sind. In diesem Fall befindet sich der Stator 20 im montierten Zustand im Inneren des Rotors 40, so dass sich zwischen der Wicklung 26 des Stators 20 und den Magneten 44 des Rotors 40 ein Luftspalt befindet. In alternativer Ausbildung kann der Rotor 40 auch als Innenläufer ausgebildet sein, wobei die Magnete 44 an dem äußeren Umfang des Rotorkerns 42 angeordnet sind. Der Rotor 40 weist ferner einen zentralen Schaft 46 auf, der mit einer hier nicht dargestellten Antriebswelle drehfest verbunden ist.

Figur 2 b zeigt eine schematische Schnittdarstellung eines Stators 20 (beziehungsweise seines Wickelkopfs oder seiner Schaltringe) sowie einer hierauf aufgebrachten Vergussmasse 30 in Form einer erfindungsgemäßen Schichtstruktur. Die erfindungsgemäße Schichtstruktur 30 umfasst drei Schichten 31, 32, 33. Die erste Schicht 31 grenzt an die Oberfläche des Stators 20 (beziehungsweise seines Wickelkopfs und/oder seiner Schaltringe). Die erste Schicht 31 umfasst ein Silikon oder besteht aus einem solchen. Das Silikon ist insbesondere ein Methylpolysiloxan-Kautschuk, beispielsweise ein Vinylmethyl-Polysiloxan-Kautschuk (VMQ) oder ein Phenylvinylmethyl-Polysiloxan-Kautschuk (PVMQ). Beispielsweise kann hier das unter der Marke RAKU-SIL® 10-S 13/9 (Fa. Rampf Giessharze GmbH & Co. KG) vertriebene Silikonelastomer verwendet werden.

Die zweite und dritte Schicht 33, 32 werden, wie in Figur 2a gezeigt, gemeinsam auf die zumindest zähflüssige erste silikonhaltige Schicht 31 aufgelegt. Dabei handelt es sich in dem gezeigten ersten Ausführungsbeispiel bei den beiden Schichten 32 und 33 in Figur 2a um eine Kunststoffschicht, die unterseitig (d. h. silikonzugewandt) faserartig und oberseitig (d. h. ölzugewandt) als dünne, feinporige Membran 32 ausgebildet ist. Bei der feinporigen Membran (Oberseite) handelt es sich um eine dünne ePTFE-Schicht. Die faserige Unterseite der Kunststoffschicht wird durch eine Vernadelung einer kompakten Kunststofffolie oder einer feinporigen Membran durch die Einwirkung einer Aneinanderreihung von feinen, heißen Nadeln in das Kunststoffmaterial hergestellt. Durch die faserartige Ausbildung wird die Oberfläche der Unterseite stark vergrößert. Wird als Ausgangsmaterial für den Nadelfilz eine kompakte Kunststofffolie verwendet, so wird in einem nachfolgenden Laminationsprozess noch eine dünne ePTFE-Schicht auflaminiert. Bei Verwendung einer feinporigen Membran als Ausgangsmaterial für die Vernadelung entfällt das Aufbringen einer Membranschicht, da diese ja schon von vorn herein vorhanden ist. Diese so gebildete aus Ober- und Unterschicht bestehende Kunststoffschicht wird dann mit der vernadelten, faserigen Unterseite auf die viskose, noch nicht ausgehärtete, silikonhaltige Schicht 31 aufgebracht, infolgedessen dringt die Masse zwischen die Fasern der Unterseite ein. Beim späteren Aushärten der Masse kommt es zu einer, auch als "Zwickel-Bildung" bezeichneten, festen stoffschlüssigen Verbindung. Als geeignete faserartige, poröse und/oder membranartigen Materialien sind beispielsweise die PTFE-oder Polyimid-Nadelfilze der Firma Heimbach zu nennen, die sich durch eine im Vergleich zur Filzschicht sehr dünne ePTFE Schicht an der Oberseite auszeichnen.

Ein weiteres Ausführungsbeispiel des erfindungsgemäßen Schichtsystems 30 zeigt Figur 3. Wie in Figur 2, zeigen die Teilzeichnungen das Schichtsystem 30 vor und nach der Applikation der zweiten Schicht 32. Das in Figur 3b durch eine schematische Schnittzeichnung dargestellte erfindungsgemäße Schichtsystem 30 zeigt ein Schichtsystem, welches auf einer Statoroberfläche aufgebracht ist. Die unterste bzw. erste Schicht 31 ist dabei wie in Figur 2 beschrieben ausgebildet. Auf diese erste Schicht 31 ist eine zweite Schicht 32 mit Textilstruktur aufgebracht. In der gewählten Ausführungsform wird die stoffschlüssige Verbindung aus erster 31 und zweiter Schicht 32 mittels eines Haftvermittlers 34 erzielt. Dabei kann die Textilstruktur, wie in Teilfigur a) dargestellt, in Form einer Platte oder eines Bandes ausgebildet sein, welches auf seiner Unterseite mit einer beispielsweise Acrylat-Klebeschicht 34 ausgebildet ist. Die zweite Schicht 32 seinerseits kann als Membran ausgebildet sein, die beispielsweise aus gerecktem ePTFE besteht. Im Sinne der Erfindung geeignete Materialien für die zweite Schicht 32 sind beispielsweise Joint Sealant F von Gore®, MultiFlon (als Platte oder Band einsetzbar von FIuorTex®), sowie ein als Style HD bezeichnetes Dichtungsband ebenfalls von der Firma FluorTex®.

Ein weiteres Ausführungsbeispiel eines erfindungsgemäßen Schichtsystems zeigt Figur 4b, die zweite Schicht 32 ist dabei als Vlies ausgeführt. Beim Herstellungsprozess eines solchen Vlieses werden die Fasern des gewählten Materials, beispielsweise durch Vernadelungstechniken miteinander verwirkt und an Ober- und Unterseite aufgeraut. Es entsteht eine, im Verhältnis zum in Figur 2 und 3 verwendeten Membran, grobe Struktur mit großer Oberfläche. Ähnlich wie in Figur 2 beschrieben, wird das Schichtsystem in Figur 4b durch Applizieren des Gewebes auf die zumindest zähflüssige silikonhaltige erste Schicht 31 ausgebildet. Das viskose Material der ersten Schicht 31 dringt in das Vlies ein und erzeugt eine feste Verbindung. Geeignete Materialien sind dabei das bereits beschriebene PTFE, aber auch beispielsweise als Hochtemperaturvliese eingesetzte Materialien wie Polyimid-Nonwoven der Firma Headingfilter. Um zu verhindern, dass das silikonhaltige Material durch das grobe Gewebe 32 hindurchdringt, kann die spätere Oberseite 36 des Vlieses mit einem Oleophobierungsmittel behandelt werden. Die Durchdringtiefe eines Oleophobierungsmittels bestimmt dann die Eindringtiefe des silikonhaltigen Materials zwischen die Fasern des unbehandelten Gewebes 35. Als Oleophobierungsmittel geeignet sind beispielsweise Reagenzien des Capstone-Programms von Du Pont, wie FS 22, FS 61, FS 63, FS 81, FS 83 und FS 3100 sowie Mischungen und Verdünnungen davon, Hyflon®-Typen, wie XPH 5510 und MFA D 5220, von Solvay®, sowie Dyneon™ PTFE Dispersionen, wie TF 5060GZ und TF 5050Z von 3M®. Ebenfalls können Mischungen verschiedener Oleophobierungsmittel und/oder Verdünnungen von Oleophobierungsmitteln zum Einsatz kommen. Zur Oleophobierung des Gewebes 32 wird ein geeignetes Mittel vorzugsweise durch Aufsprühen auf das Gewebe 32 aufgebracht. Dieser Vorgang kann nach Bedarf wiederholt werden. Diese Materialien zeichnen sich durch eine geringe Eindringtiefe aus. Vielmehr bildet sich zunächst ein Film auf dem Vlies, der beim späteren Aushärten eine oleophobe Schicht 36 ergibt, die mit dem Gewebe vernetzt ist.

In Ausführungsbeispielen zeigte sich die Verwendung von 1,3mm dickem PTFE-Nadelfilz des Typs 898F25 bzw. 1,6mm dickem Filz des Typs 898F11 (beides Fa. Heimbach) als bevorzugt, der in beiden Fällen mit 40ml/m² Capstone-Lösung besprüht wurde. Nach dem Trocknen der Dispersion über Nacht bei Raumtemperatur ergab sich eine oleophobierte Oberfläche, die sowohl Pentosinöl (Pentosin FFL-2) als auch Silikon abwies.

Die in den Figuren 2 bis 4 beschriebenen Anwendungsbeispiele des erfindungsgemäßen Schichtsystems können außer auf Statoroberflächen auch zur Abdichtung von beispielsweise öltragenden Gefäßen, wie Ölwannen oder ähnlichem, Verwendung finden. Darüber hinaus ist die Anwendung als Dichtung bevorzugt. Hierbei kann ein Kern 37, beispielsweise ein Dichtring o.ä., auf der Basis von Silikon entsprechend einer ersten Schicht mit einem textilen Gewebe 32 beschichtet werden. Figur 5 a, b und c zeigen hierzu die aus Figur 2,3 und 4 übertragenen Ausführungsbeispiele. Figur 5 zeigt dem folgend ein Schichtsystem aus einem Silikonkern 37, mit dem ein faserartiges, poröses und/oder membranartiges also im Sinne der Erfindung textiles Material auf der Basis eines thermoplastischen Kunststoffs fest verbunden ist. Dabei entsteht die feste Verbindung in Figur 5a durch das Hineinragen einer aufgerauten nadelartigen Unterseite 33 des Gewebes. Figur 5b zeigt eine Verklebung des Gewebes 32 mittels eines Haftvermittlers 34 und Figur 5c zeigt eine Verbindung aus Silikonkern und einem Vlies, welches an einer Seite 36 mit dem Kern über Fasern vernetzt und an der dem Kern abgewandten Außenseite 35 oleophobiert ist.

Darüber hinaus kann in jedem Ausführungsbeispiel die zweite Schicht wiederum aus zwei Schichten aufgebaut sein. Diese Zusammensetzung ist dabei unten stehender Tabelle zu entnehmen.

| Mehrschichtstruktur der zweiten Schicht 32 | Schicht 32a (Haftung auf Silikonschicht) | Schicht 32b (Oberseite schließt zur Kontamination hin ab) |
|---|---|---|
| 1 | Faserschicht | entfällt |
| 2 | Faserschicht 1 (grobe Fasern) | Faserschicht 2 (feine Fasern) |
| 3 | Faserschicht | Schaumschicht |
| 4 | Faserschicht | Membran |
| 5 | Schaum schicht | entfällt |
| 6 | Schaumschicht (grobzellig) | Schaumschicht (feinzellig) |

Die zweite, zur Kontamination hin abschließende Schicht, kann zusätzlich mit einem Oleophobierungsmittel ausgerüstet werden.

### Bezugszeichenliste

- 10: elektrische Maschine/Elektromotor

- 20: Stator
- 22: Statorkern
- 24: Nut
- 26: Wicklung
- 28: Wickelkopf

- 30: Schichtstruktur/Vergussmasse
- 31: erste Schicht/Silikonschicht
- 32: zweite Schicht/textiles Gewebe
- 33: nadelförmige Fasern des textilen Gewebes
- 34: Haftvermittler
- 35: Vlies-Unterseite
- 36: Vlies-Oberseite/oleophobiert
- 37: Silikonkern

- 40: Rotor
- 42: Rotorkern
- 44: Magnete
- 46: Schaft

- 50: Schichtstruktur/Verklebung

## Patentansprüche

1. Elektrische Maschine (10), umfassend einen Stator (20) und einen Rotor (40), wobei der Stator (20) und/oder der Rotor (40) eine Wicklung (26) und/oder Permanentmagnete (44) umfasst, und wobei im Bereich der Wicklung (26) und/oder im Bereich einer Verklebung der Permanentmagnete (44) eine oleophob-hydrophobe Schichtstruktur (30) angeordnet ist, umfassend
i. eine erste, ein Silikon umfassende Schicht (31), und
ii. eine außenliegende zweite, mit der ersten Schicht (31) stoffschlüssig verbundene Schicht (32) mit oleophob-hydrophober Oberfläche, umfassend eine Textilstruktur aus einem thermoplastischen Kunststoff, wobei die stoffschlüssige Verbindung durch Eindringen des Silikons der ersten Schicht (31) in die Textilstruktur der zweiten Schicht (32) ausgebildet ist.

2. Elektrische Maschine (10) nach Anspruch 1, **dadurch gekennzeichnet, dass** die stoffschlüssige Verbindung als Verklebung der beiden Schichten, optional mittels eines Haftvermittlers (34), ausgebildet ist.

3. Elektrische Maschine (10) nach einem der vorhergehenden Ansprüche, **dadurch gekennzeichnet, dass** der thermoplastische Kunststoff ein ölbeständiges Polymer, insbesondere Polytetrafluorethylen (PTFE) und/oder Polyimid ist oder umfasst.

4. Elektrische Maschine (10) nach einem der vorhergehenden Ansprüche, **dadurch gekennzeichnet, dass** die Textilstruktur eine Membran, ein Vlies, ein faserartiges Gewebe und/oder einen Schaum ist oder umfasst.

5. Elektrische Maschine (10) nach Anspruch 4, wobei die Textilstruktur eine faserige, poröse oder mit Haftvermittler versehene Unterseite (33, 35) umfasst.

6. Elektrische Maschine (10) nach einem der vorhergehenden Ansprüche, **dadurch gekennzeichnet, dass** die zweite Schicht (32) an der von der silikonhaltigen ersten Schicht abgewandten Seite, insbesondere durch Aufsprühen einer oleophoben Schicht, oleophobiert ist.

7. Verfahren zum Ausbilden einer Schichtstruktur (30) einer elektrischen Maschine (10) nach einem der vorhergehenden Ansprüche, wobei die zweite Schicht (32) vor einem Aushärten der ersten, ein Silikon umfassenden Schicht (31) flächig auf diese aufgelegt wird und das flüssige Silikon vor dem Aushärten und die Fasern (33, 35) und oder Poren der Textilstruktur einander durchdringen.

8. Verfahren nach Anspruch 7, **dadurch gekennzeichnet, dass** vor und/oder nach dem Auflegen der zweiten Schicht (32) ein Oleophobierungsmittel auf die zweite Schicht (32) aufgebracht wird.

## Claims

1. Electric machine (10) comprising a stator (20) and a rotor (40), wherein the stator (20) and/or the rotor (40) comprises a winding (26) and/or permanent magnets (44), and wherein an oleophobic-hydrophobic layer structure (30) is arranged in the region of the winding (26) and/or in the region of an adhesive bond of the permanent magnets (44), comprising
i. a first layer (31) comprising a silicone, and
ii. an outer second layer (32) materially connected to the first layer (31), said outer second layer (32) having an oleophobic-hydrophobic surface, comprising a textile structure made of a thermoplastic material, wherein the material bond is formed by penetration of the silicone of the first layer (31) into the textile structure of the second layer (32).

2. Electric machine (10) according to claim 1, **characterized in that** the material bond is designed as an adhesive bonding of the two layers, optionally by means of an adhesion promoter (34).

3. Electric machine (10) according to any one of the preceding claims, **characterized in that** the thermoplastic material is or comprises an oil-resistant polymer, in particular polytetrafluoroethylene (PTFE) and/or polyimide.

4. Electric machine (10) according to any one of the preceding claims, **characterized in that** the textile structure is or comprises a membrane, a nonwoven material, a fibrous fabric, and/or a foam.

5. Electric machine (10) according to claim 4, wherein the textile structure comprises an underside (33, 35) that is fibrous, porous, or provided with an adhesion promoter.

6. Electric machine (10) according to any one of the preceding claims, **characterized in that** the second layer (32) is made oleophobic on the side facing away from the silicone-containing first layer, in particular by spraying on an oleophobic layer.

7. Method for forming a layer structure (30) of an electric machine (10) according to any one of the preceding claims, wherein, before a curing of the first layer (31) comprising a silicone, the second layer (32) is laid on said first layer (31), and wherein the liquid silicone, before curing, and the fibers (33, 35) and/or pores of the textile structure mutually penetrate each other.

8. Method according to claim 7, **characterized in that** an oleophobicizing agent is applied onto the second layer (32) before and/or after the placement of the second layer (32).

## Revendications

1. Machine électrique (10), comprenant un stator (20) et un rotor (40), le stator (20) et/ou le rotor (40) comprenant un enroulement (26) et/ou des aimants permanents (44), et une structure en couches (30) oléophobe-hydrophobe étant disposée dans la zone de l'enroulement (26) et/ou dans la zone d'un collage des aimants permanents (44), comprenant
i. une première couche (31) comprenant du silicone, et
ii. une deuxième couche (32) située à l'extérieur, liée par adhérence de matière à la première couche (31), comprenant une surface oléophobe-hydrophobe, comprenant une structure textile composée d'une matière thermoplastique, la liaison par adhérence de matière étant formée par la pénétration du silicone de la première couche (31) dans la structure textile de la deuxième couche (32).

2. Machine électrique (10) selon la revendication 1, **caractérisée en ce que** la liaison par adhérence de matière étant formée en tant que collage des deux couches, en option au moyen d'un agent d'adhérence (34).

3. Machine électrique (10) selon l'une quelconque des revendications précédentes, **caractérisée en ce que** la matière thermoplastique est ou comprend un polymère résistant à l'huile, en particulier du polytétrafluoroéthylène (PTFE) et/ou du polyimide.

4. Machine électrique (10) selon l'une quelconque des revendications précédentes, **caractérisée en ce que** la structure textile est ou comprend une membrane, un matériau non tissé, un tissu fibreux et/ou une mousse.

5. Machine électrique (10) selon la revendication 4, dans laquelle la structure textile comprend une face inférieure (33, 35) fibreuse, poreuse ou munie d'agent d'adhérence.

6. Machine électrique (10) selon l'une quelconque des revendications précédentes, **caractérisée en ce que** la deuxième couche (32) est rendue oléophobe sur une face opposée à la première couche contenant du silicone, en particulier par la pulvérisation d'une couche oléophobe.

7. Procédé pour la formation d'une structure en couches (30) d'une machine électrique (10) selon l'une quelconque des revendications précédentes, dans lequel la deuxième couche (32) est, avant le durcissement de la première couche (31) comprenant un silicone, appliquée sur la surface de celle-ci et le silicone liquide avant le durcissement et les fibres (33, 35) et/ou les pores de la structure textile s'interpénètrent.

8. Procédé selon la revendication 7, **caractérisé en ce que,** avant et/ou après l'application de la deuxième couche (32), un agent oléofugeant est appliqué sur la deuxième couche (32).
